# EUROPÄISCHE PATENTSCHRIFT

(11) **EP 2 957 417 B1**
(45) Veröffentlichungstag und Bekanntmachung des Hinweises auf die Patenterteilung: **09.08.2017**
(21) Anmeldenummer: 14172763.6
(22) Anmeldetag: 17.06.2014
(51) Int. Cl.: B29C 65/16, B65B 7/28, B65B 51/10

(54) **Verfahren zum fluiddichten Verbinden eines Verschlussteils mit einem Verpackungsbehälter und entsprechend hergestellte Verpackung**
Method for fluid proof bonding of a covering part with a packaging container and packaging obtained thereby
Méthode pour unir de manière étanche aux fluides une pièce de couvercle avec un récipient d'emballage et emballage ainsi obtenu

(43) Veröffentlichungstag der Anmeldung: 23.12.2015
(73) Patentinhaber: Leister Technologies AG, 6056 Kägiswil (CH)
(72) Erfinder: Rudolf, Jean-Claude, 6012 Obernau (CH); Scheller, Mike, 6370 Stans (CH)
(74) Vertreter: Klocke, Peter

(56) Entgegenhaltungen:
- JP-A- 2013 203 026

## Beschreibung

Die Erfindung betrifft ein Verfahren zum fluiddichten Verbinden eines Verschlussteils mit einem Verpackungsbehälter einer fluiddichten Verpackung mittels Laserdurchstrahlschweißen, wobei der Verpackungsbehälter Kunststoffmaterial zumindest als äußere Schichtlage in einem Anbindungsbereich für das Verschlussteil aufweist, der eine mit dem Verschlussteil zu verschließende Zuführ-/Entnahmeöffnung für ein Füllgut vollständig umgreift und wobei das Verschlussteil wenigstens an einem dem Anbindungsbereich des Verpackungsbehälters zugeordneten Verbindungsbereich Kunststoffmaterial zumindest als Beschichtung aufweist, wobei das Verschlussteil und der Verpackungsbehälter vorzugsweise mit Füllgut gefüllt bereitgestellt und das Verschlussteil mit dem Verbindungsbereich auf den Anbindungsbereich des Verpackungsbehälters aufgesetzt wird, der Verpackungsbehälter und das Verschlussteil mit einem linienförmigen oder flächenhaften energiereichen Laserstrahls bestrahlt und eine stoffschlüssige Verbindung des Verbindungsbereiches des Verschlussteils mit dem Anbindungsbereich des Verpackungsbehälters durch aneinander Pressen hergestellt wird.

Die Erfindung betrifft außerdem eine Verpackung für feste, rieselfähige, pastöse oder flüssige Füllstoffe, mit einem Verpackungsbehälter der einen Hohlraum für die Füllstoffe aufweist, und mit einem den Hohlraum Fluiddicht verschließenden Verschlussteil, wobei der Verpackungsbehälter Kunststoffmaterial zumindest als äußere Schichtlage in einem Anbindungsbereich für das Verschlussteil aufweist, der eine mit dem Verschlussteil zu verschließende Zuführ-/Entnahmeöffnung für das Füllgut vollständig umgreift und wobei das Verschlussteil wenigstens an einem dem Anbindungsbereich des Verpackungsbehälters zugeordneten Verbindungsbereich Kunststoffmaterial zumindest als Beschichtung aufweist, und das Verschlussteil mit dem Verpackungsbehälter mittels Laserdurchstrahlschweißen stoffschlüssig verbunden ist.

Das Verschweißen von Vollkunststoffteilen und/oder kunststoffbeschichteten Teilen miteinander, unter Einwirkung eines energiereichen Laserstrahls, ist aus dem Stand der Technik allgemein bekannt. Bei einem solchen Verfahren wird ein erstes Teil mit einem zweiten Teil durch Aufschmelzen deren Oberfläche in einem Anlagebereich unter gleichzeitiger Krafteinwirkung unter Ausbildung einer Schweißnaht stoffschlüssig verbunden. Die Energie zum lokalen Aufschmelzen des ersten und des zweiten Teils wird durch den Laserstrahl zur Verfügung gestellt, wobei eines der Teile aus einem Material besteht, welches die Energie des Laserstrahls nicht oder nur schwach absorbiert, und das andere Teil aus einem Material gefertigt ist, welches die Energie des Laserstrahls stark absorbiert. Beispielhaft wird auf die Druckschriften DE 101 31 430 A1 und DE 10 2009 037 404 B4 verwiesen.

Zudem ist aus der EP 1 911 677 A1 ein Verfahren zum Herstellen einer hermetisch abgedichteten Verpackung für Getränke oder Nahrungsmittel bekannt, bei dem ein Behälterkörper eines Verpackungsbehälters und ein an dem Behälterkörper angeordneter Deckel als Verschlussteil für den Verpackungsbehälter im Laserschweißverfahren zum Erzielen eines luftdichten Zustandes dichtend miteinander verbunden werden. Während der Verpackungsbehälter kontinuierlich auf einer Förderstrecke fortbewegt wird, wird der Behälterkörper mit an dem Behälterkörper angeordnetem Deckel für eine Zeitdauer mit Laserlicht bestrahlt, während der sich der Behälter in einen spezifischen Positionsbereich einer Verpackungsmaschine befindet. Dabei wird der vorgesehene Schweißbereich mit einem von einem Strahlformungselement ringförmig geformten Laserstrahl simultan mit Laserlicht beaufschlagt. Das Strahlformungselement ist spezifisch für die zu erzeugende ringförmige Schweißnaht eines Behältertyps ausgebildet. Wechselt der Behältertyp, so ist in der Regel ein Austausch oder zumindest eine Anpassung des Strahlformungselementes notwendig. Weiterer Nachteil bei dem bekannten Verfahren ist, dass der ringförmige Laserstrahl dem geförderten Verpackungsbehälter folgen muss, um einen ausreichenden Energieübertrag auf den Behälterkörper und/oder den Deckel zu gewährleisten. Dazu muss der Laserkopf mit der Transportgeschwindigkeit des gefüllten Verpackungsbehälters dem Behälter nachgeführt und nach der Verschweißung des Deckels mit dem Behälterkörper erneut zum nächsten Verpackungsbehälter verfahren werden. Damit geht wertvolle Prozesszeit verloren, die eine unerwünschte Kapazitätsminderung der Verpackungsmaschine bewirkt.

Des Weiteren ist aus der JP 2013-203026 A ein Verfahren zum Verschließen einer Verpackung mittels Laserdurchstrahlschweißen in Verbindung mit einer Schattenmaske bekannt, die ein schalenförmiges Aufnahmeteil für ein Füllg ut und ein ebenes Deckelteil umfasst, die aus Kunststoffmaterial hergestellt sind. Das Deckelteil wird auf das Aufnahmeteil aufgesetzt und umgreift die zu verschließende Zuführ-/Entnahmeöffnung des Aufnahmeteils vollständig. Das Aufnahmeteil mit dem aufgesetzten Deckelteil wird zum Verschweißen der Verpackung mit einem linienförmigen oder flächenhaften energiereichen Laserstrahls bestrahlt, wobei eine herkömmliche abschattende Lasermaske auf die Verpackung aufgelegt und eine stoffschlüssige Verbindung des Deckelteils mit dem Aufnahmeteil durch Pressen mittels der Lasermaske hergestellt wird.

Ausgehend von diesem Stand der Technik liegt der Erfindung die Aufgabe zugrunde, ein vereinfachtes Herstellungsverfahren zum fluiddichten Verbinden eines Verschlussteils mit einem Verpackungsbehälter mittels Laserdurchstrahlschweißen vorzuschlagen, bei dem der Laserkopf und auch der Laserstrahl ortsfest sind und der Laserstrahl auch bei unterschiedlich ausgebildetem Verschlussteil und Verpackungsbehälter in seiner Form und Lage unverändert beibehalten werden kann. Weitere Aufgabe der Erfindung ist, eine Verpackung mit einer mit dem Verpackungsbehälter fluiddicht verbundenen Verschlussteil bereitzustellen, das die Anwendung des vorgeschlagenen Herstellungsverfahrens ermöglicht und entsprechend hergestellt ist.

Diese Aufgabe wird erfindungsgemäß durch ein Verpackungsverfahren bzw. eine Verpackung mit den Merkmalen der beiden nebengeordneten unabhängigen Patentansprüche 1 und 11 gelöst. Weitere vorteilhafte Ausgestaltungen sind den jeweils rückbezogenen Patentansprüchen zu entnehmen.

Das erfindungsgemäße Verfahren zum fluiddichten Verbinden eines Verschlussteils mit einem Verpackungsbehälter im Laserdurchstrahlschweißverfahren setzt voraus, dass der Verpackungsbehälter Kunststoffmaterial zumindest als äußere Schichtlage in einem Anbindungsbereich für das Verschlussteil und das Verschlussteil wenigstens an einem dem Anbindungsbereich des Verpackungsbehälters zuordneten Verbindungsbereich Kunststoffmaterial zumindest als Beschichtung aufweist. Der Kerngedanke der Erfindung besteht nun darin, den Verpackungsbehälter und das Verschlussteil über den Anbindungsbereich bzw. den Verbindungsbereich seitlich deutlich hinausgehend mittels eines linienförmigen oder flächenhaften energiereichen Laserstrahls mit Laserlicht zu beaufschlagen, ohne den Verpackungsbehälter oder das Verschlussteil außerhalb des Anbindungsbereiches des Verpackungsbehälters und/oder des Verbindungsbereiches der Verschlussteils übermäßig zu erhitzen und damit frei von möglichen Beschädigungen zu halten. Dabei soll auch eine Bestrahlung des in dem Verpackungsbehälter aufgenommenen Füllgutes aus den gleichen Gründen verhindert werden. Außerhalb des Anbindungsbereiches und/oder des Verbindungsbereiches bedeutet in diesem Zusammenhang, dass der Laserstrahl auf Umgebungsabschnitte des Verpackungsbehälters und/oder Verschlussteils gerichtet wird, die von dem Anbindungsbereich und/oder Verbindungsbereich eingeschlossen sind bzw. den Anbindungsbereich und/oder den Verbindungsbereich umgreifen.

Während des Laserdurchstrahlschweißens wird der Laserstrahl dabei relativ zu dem Anbindungsbereich bzw. Verbindungsbereich bewegt, wobei insbesondere der Laserstrahl ortsfest ist und in seiner Form unverändert bleibt und der Verpackungsbehälter mit dem Verschlussteil gegenüber dem Laserstrahl bewegt wird. Um Beschädigungen oder Veränderungen des Verpackungsbehälters, des Verschlussteils und/oder von in einem Hohlraum des Verpackungsbehälters angeordnetem Füllgut auszuschließen, erfolgt die Beaufschlagung des Anbindungsbereiches des Verpackungsbehälters bzw. des Verbindungsbereiches des Verschlussteils mit dem energiereichen Laserlicht über eine Schattenmaske, die den Laserstrahl nur auf den Anbindungsbereich bzw. den Verbindungsbereich fallen lässt. Die Schattenmaske für den Laserstrahl wird für den Verbindungsvorgang von Verpackungsbehälter und Verschlussteil direkt angrenzend an den Anbindungsbereich bzw. Verbindungsbereich angeordnet. Sie ist mit dem Verpackungsbehälter oder dem Verschlussteil verbunden und Teil des Verpackungsbehälters oder des Verschlussteils. Sie wird von einer Beschichtung des Verpackungsbehälters bzw. des Verschlussteils gebildet, die stoffschlüssig aufgebracht ist. Die Schattenmaske überdeckt den Verpackungsbehälter und/oder das Verschlussteil zumindest teilweise außerhalb des Anbindungsbereiches des Verpackungsbehälters bzw. des Verbindungsbereiches des Verschlussteils und schützt damit diejenigen Stellen des Verpackungsbehälters mit Verschlussteils vor einfallendem Laserlicht, die nicht erhitzt werden sollen. Der Anbindungsbereiches des Verpackungsbehälters und der Verbindungsbereiches des Verschlussteils davon ausgenommen, da dort eine Erhitzung des Kunststoffmaterials zur dessen Aufschmelzung für die Ausbildung einer Schweißnaht notwendig ist. Die kann auch die mit dem Verschlussteil zu verschließende Zuführ-/Entnahmeöffnung des Verpackungsbehälters für das Füllgut vollständig abdecken.

Das Verbinden des Verschlussteils mit dem Verpackungsbehälters im Laserdurchstrahlschweißverfahren erfordert nach dem Aufschmelzen des Anbindungsbereiches des Verpackungsbehälters und/oder des Verbindungsbereiches des Verschlussteils mittels des energiereichen Laserstrahls eine Krafteinwirkung auf diese Teile, die das Verschlussteil gegen den Verpackungsbehälter presst, bis die gebildete Kunststoffmaterialschmelze abgekühlt und erstarrt ist. Die erforderliche Anpresskraft kann mit allen geeigneten, dem Fachmann bekannten Maßnahmen bewirkt werden. Der Andruck des Verschlussteils kann beispielsweise mittels einem Rad, vorzugsweise einem segmentierten Rad, oder einer keilförmig zulaufenden Schiene erfolgen, die einen Niederhalter bilden. Es ist von Vorteil, den Niederhalter in einem transparenten und damit für Laserlicht durchlässigen Material auszuführen.

Erfindungsgemäß wird der Verpackungsbehälter außerhalb des Anbindungsbereiches und/oder das Verschlussteil außerhalb des Verbindungsbereiches mit einer Laserlicht rückstrahlenden Reflexionsschicht beschichtet.

Bei dem vorgeschlagenen Verfahren sind die folgenden Schritte vorgesehen:
- Beschichten des Verpackungsbehälters außerhalb des Anbindungsbereiches und/oder des Verschlussteils außerhalb des Verbindungsbereiches mit einer Laserlicht rückstrahlenden Reflexionsschicht;
- Bereitstellen des mit Füllgut gefüllten Verpackungsbehälters und Aufsetzen des Verschlussteils mit dem Verbindungsbereich auf den Anbindungsbereich des Verpackungsbehälters;
- Bestrahlen des Verpackungsbehälters und des Verschlussteils mit einem linienförmigen oder flächenhaften energiereichen Laserstrahl; und
- Herstellen einer stoffschlüssigen Verbindung des Verbindungsbereiches des Verschlussteils mit dem Anbindungsbereich des Verpackungsbehälters durch aneinander Pressen.

Dabei kann die Beschichtung des Verpackungsbehälters bzw. des Verschlussteils durch direktes Auftragen einer Materialschicht oder durch Applizieren eines beschichteten Aufklebers erfolgen. Die Laserlicht rückstrahlende Reflexionsschicht ist vorzugsweise stoffschlüssig direkt oder indirekt mit dem Verpackungsbehälter bzw. dem Verschlussteil verbunden. Es ist selbstverständlich, dass für das an sich bekannte Laserdurchstrahl-Maskenschweißverfahren der Verpackungsbehälter oder das Verschlussteil Laserlicht absorbierendes Kunststoffmaterial zumindest im Anbindungsbereich bzw. Verbindungsbereich aufweist und die jeweils andere Komponente im Wesentlichen für das Laserlicht durchlässig ist, oder dass sowohl der Verpackungsbehälter wie auch das Verschlussteil nicht Laserlicht absorbierend ausgeführt sind und eine Laserlicht absorbierende Kunststofffolie als Zwischenschicht verwendet wird.

Vorzugsweise wird bei dem vorgeschlagenen Verfahren zum fluiddichten Verbinden eines Verschlussteils mit einer Verpackungsbehälter, der Verpackungsbehälter mit dem aufgesetzten Verschlussteil gegenüber einem ortsfesten Laserstrahl kontinuierlich bewegt. Dabei können abhängig von der Breite des Laserstrahls mehrere nebeneinander angeordnete Verpackungsbehälter mit Verschlussteil gleichzeitig mit Laserlicht beaufschlagt werden. Insbesondere können ein oder mehr derartige Verpackungsbehälter mit Verschlussteilen unabhängig von ihrer Größe und Form und von der Geometrie des Anbindungsbereiches des Verpackungsbehälters bzw. des Verbindungsbereiches des Verschlussteils auf einfache Weise verschweißt werden.

Bei einer weiteren bevorzugten Ausführungsform des erfindungsgemäßen Verfahrens wird der Laserstrahl synchronisiert mit der Bewegungsgeschwindigkeit des Verpackungsbehälters mit Verschlussteil ein- und ausgeschaltet. Dies bewirkt, dass nicht der gesamte Verpackungsbehälter mit dem Laserstrahl bestrahlt wird, sondern nur des Anbindungsbereiches des Verpackungsbehälters bzw. des Verbindungsbereiches des Verschlussteils sowie derjenige Teil des Verpackungsbehälters und/oder des Verschlussteils außerhalb des Anbindungsbereiches bzw. des Verbindungsbereiches partiell, an dem die das Laserlicht rückstrahlende Reflexionsschicht angeordnet ist. Die Fläche der Reflexionsschicht kann somit gegenüber den Abmaßen der Verpackungsbehälter kleiner gehalten werden, so dass noch genügend Fläche für artikelspezifische oder firmeneigene Beschriftungen und/oder Abbildungen zur Verfügung steht.

Die Reflexionsschicht weist in jedem Fall eine helle Farbe auf, damit das Laserlicht nicht absorbiert wird und ist somit in der Regel unauffällig. Sie stört das Erscheinungsbild der fertiggestellten Verpackung kaum oder nicht. Die Reflexionsschicht wird vorzugsweise aufgedruckt, wobei insbesondere reflektierende Farbstoffe verwendet werden. Die Reflexionsschicht kann schon bei der Herstellung des Verpackungsbehälters bzw. des Verschlussteils oder auch später als Beschichtung aufgebracht werden. Ein Bedrucken des Verpackungsbehälters bzw. des Verschlussteils ist in der Regel ohnehin vorgesehen, so dass die Aufbringung der Reflexionsschicht in einem gemeinsamen Arbeitsgang kostengünstig erfolgen kann.

Bei einer anderen bevorzugten Verfahrensform wird für den Verpackungsbehälter Laserlicht absorbierendes und für das Verschlussteil Laserlicht durchlässiges Kunststoffmaterial verwendet, wobei die Reflexionsschicht auf der dem Verpackungsbehälter zugewandten oder abgewandten Seite des Verschlussteils angeordnet wird. Eine andere begünstigte Verfahrensform sieht vor, dass für den Verpackungsbehälter und das Verschlussteil Laserlicht durchlässiges Kunststoffmaterial verwendet wird, wobei die Reflexionsschicht auf der dem Verpackungsbehälter abgewandten Seite des Verschlussteils angeordnet wird und auf der dem Verpackungsbehälter zugewandten Seite des Verschlussteils zumindest im Verbindungsbereich eine Laserlicht absorbierende Absorptionsschicht angeordnet wird.

Bei einer weiteren anderen bevorzugten Verfahrensform ist vorgesehen, dass für den Verpackungsbehälter und das Verschlussteil Laserlicht durchlässiges Kunststoffmaterial verwendet wird, wobei die Reflexionsschicht auf der dem Verpackungsbehälter abgewandten Seite des Verschlussteils angeordnet wird, und an dem Anbindungsbereich des Verpackungsbehälters und/oder an dem Verbindungsbereich des Verschlussteils ein Laserlicht absorbierende Absorptionsschicht angeordnet wird.

Die Absorptionsschicht wird vorzugsweise aufgedruckt. Dazu werden insbesondere Laserlicht absorbierende Farbstoffe verwendet.

Damit sind alle beim Laserdurchstrahlschweißverfahren möglichen Konfigurationen abgedeckt. Die Beaufschlagung des Anbindungsbereiches des Verpackungsbehälters oder des Verbindungsbereiches des Verschlussteiles mit Laserlicht erfolgt in allen vorstehend angegebenen Fällen, indem der Laserstrahl auf diejenige Komponente, Verpackungsbehälter oder Verschlussteil, gerichtet wird, der für Laserlicht durchlässig ausgebildet ist und somit das Laserlicht nicht absorbiert.

Das vorgeschlagene erfindungsgemäße Verfahren ist geeignet zum fluiddichten Verschließen eines einen Hohlraum für die Aufnahme von Füllgut aufweisenden Verpackungsbehälters mittels eines Verschlussteils, der vollständig aus Kunststoff hergestellt ist oder außen zumindest eine Kunststoffschicht trägt und dessen Kunststoffmaterial laserschweißbar ist. Der Verpackungsbehälter kann warm geformt, d. h. tiefgezogen bzw. spritzgegossen oder aus einer KunststoffVerbundfolie gefaltet sein, die an geeigneten Kanten verklebt oder verschweißt ist. Gleiches gilt für das Verschlussteil. Als Verschlussteil kann zudem auch eine ebene unstrukturierte und damit flache Kunststofffolie verwendet werden. Die Form, Größe, Farbe, Aufmachung und Materialart bzw. Materialkombination des Verpackungsbehälters und des Verschlussteils sind beliebig wählbar, solange die Kunststoffmaterialen kompatibel sind und eine Kunststoffschweißverbindung zulassen.

Mit dem vorgeschlagenen Verfahren können insbesondere mit Füllgut gefüllte Verpackungsbehälter mittels des Verschlussteils einfach, schnell und sicher fluiddicht verschlossen werden. Vorteil des erfindungsgemäßen Verfahrens ist, dass die Schattenmaske zum einen kostengünstig herstellbar ist, und zum anderen nicht auf oder über den Verpackungsbehälter mit dem Verschlussteil für den Schweißvorgang anzuordnen ist. Sie muss zudem nicht durch eine spezielle externe Vorrichtung positioniert, mit dem Verpackungsbehälter mit daran angeordneten Verschlussteilen mitbewegt und von diesen wieder entfernt werden.

Bei der erfindungsgemäßen fluiddichten Verpackung für feste, rieselfähige, pastöse oder flüssige Füllstoffe, mit einem Verpackungsbehälter, der einen Hohlraum für die Füllstoffe aufweist und mit einem den Hohlraum fluiddicht verschließenden Verschlussteil, Verpackungsbehälter mittels Laserdurchstrahlschweißen verbunden ist, bei dem das Verschlussteil mit dem Verpackungsbehälter mittels Laserdurchstrahlschweißen verbunden oder verbindbar ist, weist der Verpackungsbehälter außerhalb des Anbindungsbereiches und/oder das Verschlussteil außerhalb des Verbindungsbereiches eine Laserlicht rückstrahlende Reflexionsschicht auf. Die reflektierende Beschichtung kann eine metallische Beschichtung sein, die das Licht direkt zurückreflektiert oder ein weißes, insbesondere mineralisches Pigment, dass das Laserlicht größtenteils diffus zurückstreut. Der Verpackungsbehälter weist zumindest als äußere Schichtlage in einem Anbindungsbereich für das Verschlussteil und das Verschlussteil wenigstens an einem dem Anbindungsbereich des Verpackungsbehälters zugeordneten Verbindungsreich Kunststoffmaterial zumindest als Beschichtung auf, die kompatibel miteinander ausgewählt sind und somit im Laserschweißverfahren stoffschlüssig miteinander verbunden werden können.

Bei einer bevorzugten Ausführungsform der erfindungsgemäßen ist zumindest an dem Anbindungsbereich des Verpackungsbehälters oder dem Verbindungsbereich des Verschlussteils eine Laserlicht absorbierende Absorptionsschicht angeordnet, die insbesondere dann wirksam ist, wenn sowohl der Verpackungsbehälter wie auch das Verschlussteil aus für Laserlicht transparenten Kunststoffmaterial hergestellt sind.

Der Verpackungsbehälter kann beispielsweise eine aus einer stärkeren Kunststofffolie hergestellte tiefgezogene Schale mit einem umlaufenden Rand als Anbindungsbereich für ein zumindest im Bereich der Zuführ-/Entnahmeöffnung für das Füllgut eben ausgebildetes Verschlussteil in Form einer unstrukturierten oder geringfügig tiefgezogenen Kunststofffolie mit einem außen umlaufenden dem Anbindungsbereich des Verpackungsbehälters zugeordneten Verbindungsbereich sein. Der Verpackungsbehälter kann zum Beispiel auch ein innen und außen kunststoffbeschichteter gefalteter dichter Getränkekarton sein, mit einer Zuführ-/Entnahmeöffnung, die mittels eines Verschlussteils in Form eines Kunststoffspritzteils, das einen Ausgießer mit einem Schraubdeckel aufweist, fluiddicht verschließbar ist. Ein solcher Getränkekarton weist um die Zuführ-/Entnahmeöffnung herum einen sich ringförmig geschlossen erstreckenden Anbindungsbereich für das Verschlussteil auf, das an einem Fuß des Ausgießers mit einen dem Anbindungsbereich des Verpackungsbehälters zugeordneten Verbindungsbereich ausgebildet ist.

Beide vorstehend beispielhaft genannten Ausführungsbeispiele der Verpackung weisen eine aufgedruckte oder auflaminierte rückstrahlende Reflexionsschicht für das Laserlicht eines linienförmigen oder flächenhaften energiereichen Laserstrahls auf, die außerhalb des Anbindungsbereichs des Verpackungsbehälters bzw. des Verbindungsbereichs des Verschlussteils verläuft. Bei entsprechender Größe der Reflexionsschicht ist eine Beeinflussung des Materials des Verpackungsbehälters bzw. des in dem Hohlraum des Verpackungsbehälters aufgenommenen Füllgutes durch den Laserstrahl weitgehend ausgeschlossen.

Das erfindungsgemäße vorstehend beschriebene Verfahren kann auch für die Fertigstellung einer derartigen Getränkekartonverpackung verwendet werden, bei der der gefüllte Getränkekarton mittels des den Schraubverschluss tragenden Ausgießers fluiddicht verschlossen wird. Dazu wird bei einer bevorzugten Ausführungsform der Erfindung der Verpackungskarton zuerst im Verbindungsbereich mit einer Laserlicht absorbierenden Absorptionsschicht im Anbindungsbereich beschichtet. Zudem wird der Verpackungskarton mit einer die Absorptionsschicht umschließenden laserlichtrückstrahlenden Reflexionsschicht noch zusätzlich beschichtet. Dann wird ein vorzugsweise aus für Laserlicht durchlässigen Kunststoffmaterial hergestellte Ausgießer mit Schraubverschluss mit seinem Verbindungsbereich auf den Anbindungsbereich des Verpackungskartons aufgesetzt und die Absorptionsschicht mit Laserlicht mittels einem linienförmigen oder flächenhaften Laserstrahls beaufschlagt, wobei die aufgebrachte Reflexionsschicht den Laserstrahl von dem Getränkekarton zumindest in einem Bereich um den Ausgießer fern hält, so dass die Oberfläche des Getränkekartons dort nicht verändert wird.

Nachfolgend wird die Erfindung anhand mehrerer in der Zeichnung dargestellter Ausführungsbeispiele näher erläutert. Weitere Merkmale der Erfindung ergeben sich aus der folgenden Beschreibung des Ausführungsbeispiels der Erfindung in Verbindung mit den Ansprüchen und den beigefügten Figuren. Die einzelnen Merkmale der Erfindung können für sich allein oder zu mehreren bei unterschiedlichen Ausführungsformen der Erfindung verwirklicht sein. Es zeigen:
- Figur 1: eine erfindungsgemäße Verpackung mit einem Laserlicht absorbierenden Verpackungsbehälter und einem Laserlicht durchlässigen Verschlussteil, wobei die Reflexionsschicht oben an dem Verschlussteil angeordnet ist;
- Figur 2: eine andere erfindungsgemäße Verpackung mit einem Laserlicht absorbierenden Verpackungsbehälter und einem Laserlicht durchlässigen Verschlussteil, wobei die Reflexionsschicht unten an dem Verschlussteil angeordnet ist;
- Figur 3: eine weitere erfindungsgemäße Verpackung mit einem Laserlicht absorbierenden Verpackungsbehälter und einem Laserlicht durchlässigen Verschlussteil, wobei das Verschlussteil zweilagig ausgebildet und die Reflexionsschicht oben auf dem Verschlussteil angeordnet ist;
- Figur 4: eine erfindungsgemäße Verpackung mit einem Laserlicht durchlässigen Verpackungsbehälter und einem ebensolchen Verschlussteil, wobei das Verschlussteil zweilagig ausgebildet ist und die Reflexionsschicht oben auf dem Verschlussteil und unten an dem Verschlussteil eine Absorptionsschicht für das Laserlicht angeordnet ist.
- Figur 5: eine erfindungsgemäße Verpackung mit einem Laserlicht durchlässigen Verpackungsbehälter und ein ebensolches Verschlussteil, wobei die Reflexionsschicht oben auf dem Verschlussteil angeordnet ist und das Verschlussteil in seinem Verbindungsbereich unten örtlich eine Absorptionsschicht für das Laserlicht aufweist;
- Figur 6: eine weitere erfindungsgemäße Verpackung mit einem Laserlicht absorbierenden im Wesentlichen geschlossenen Verpackungsbehälter und einem Laserlicht durchlässigen Verschlussteil in Form eines Aufreißers, wobei der Verpackungsbehälter im Bereich des Verschlussteils eine Absorptionsschicht und eine die Absorptionsschicht umgreifende Reflexionsschicht für das Laserlicht aufweist; und
- Figur 7: eine andere erfindungsgemäße Verpackung, die ähnlich der der Figur 6 ausgebildet ist, wobei der Aufreißer durch einen Ausgießer ersetzt ist.

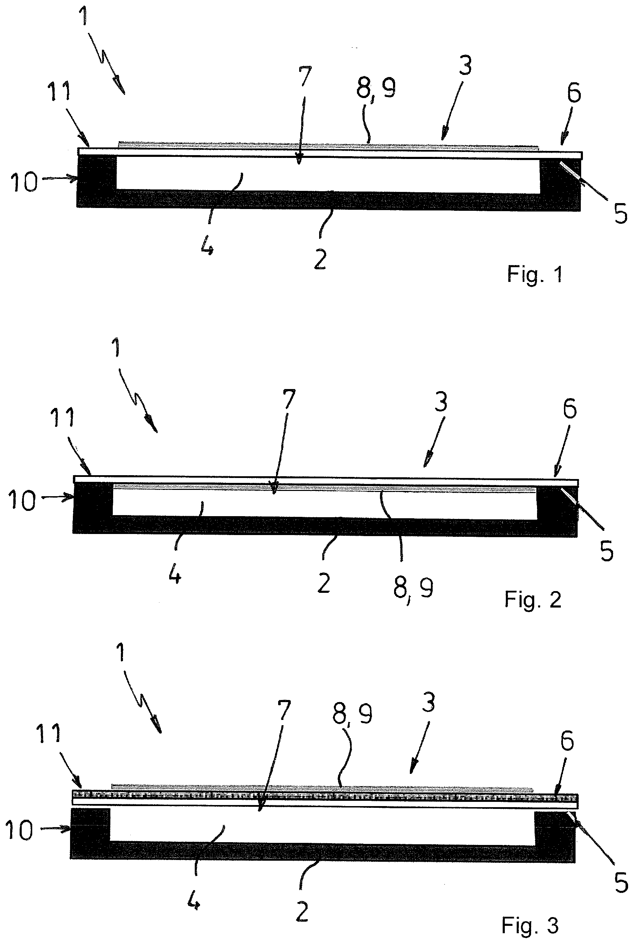

Die Figuren 1 bis 7 zeigen verschiedene Ausführungsformen einer erfindungsgemäßen fluiddichten Verpackung 1, die einen Verpackungsbehälter 2 und ein den Verpackungsbehälter 2 fluiddicht verschließendes Verschlussteil 3 aufweist, jeweils ohne in einem Hohlraum 4 des Verpackungsbehälters 2 angeordneten Füllgut. Dieses ist jedoch beim fluiddichten Verbinden des Verschlussteils 3 mit dem Verpackungsbehälter 2 in dem Hohlraum 4 aufgenommen. Jeder der Verpackungsbehälter 2 der verschiedenen Ausführungsbeispiele weist einen Anbindungsbereich 5 für das Verschlussteil 3 auf. Jedes der Verschlussteile 3 weist einen dem Anbindungsbereich 5 des Verpackungsbehälters 2 zugeordneten Verbindungsbereich 6 auf. Der Anbindungsbereich 5 und der Verbindungsbereich 6 sind einander zugeordnet und weisen dementsprechend vorzugsweise eine identische Form und Größe auf. Der Anbindungsbereich 5 des Verpackungsbehälters 2 umgreift eine mit dem Verschlussteil 3 zu verschließende Zuführ-/Entnahmeöffnung 7 für das Füllgut vollständig.

Das Verschlussteil 3 und der Verpackungsbehälter 2 sind mittels Laserdurchstrahlschweißen miteinander stoffschlüssig verbunden. Der Schweißvorgang wird mittels eines linienförmigen oder flächenhaften Laserstrahls ausgeführt, wobei das Laserlicht das Verschlussteil 3 von der dem Verpackungsbehälter 2 abgewandten Seite her beaufschlagt. Um zu verhindern, dass das Laserlicht auf das in dem Hohlraum 4 aufgenommene Füllgut fällt, d. h. neben dem Verbindungsbereich 6 das Verschlussteil 3 passiert und durch die Zuführ-/Entnahmeöffnung 7 hindurch beaufschlagt, und/oder direkt auf den Verpackungsbehälter 2 in einem Umgebungsabschnitt um den Anbindungsbereich 5 herum, an dem Verschlussteil 3 vorbei, einwirkt, ist eine Reflexionsschicht 8 an dem Verpackungsbehälter 2 und/oder dem Verschlussteil 3 angeordnet, die den Anbindungsbereich 5 des Verpackungsbehälters 2 sowie den Verbindungsbereich 6 des Verschlussteils 3 ausspart. Die Reflexionsschicht 8, die als Schattenmaske 9 für den in den Figuren nicht dargestellten Laserstrahl wirkt, reicht dabei direkt außen bis an den Anbindungsbereich 5 des Verpackungsbehälters 2 oder innen an den Verbindungsbereich 6 des Verschlussteils 3 heran. Die Schattenmaske 9 schattet die Zuführ-/Entnahmeöffnung 7 des Verpackungsbehälters 2 oder die nicht von dem Verschlussteil 3 übergriffenen Fläche des Verpackungsbehälters 2 vor Laserstrahlung ab.

Die in den Figuren 1 bis 3 dargestellten Verpackungen 1 weisen einen Verpackungsbehälter 2 auf, der schalenförmig mit einem umlaufenden Bund 10 ausgebildet ist, der den Anbindungsbereich 5 des Verpackungsbehälters 2 bildet. Der Verpackungsbehälter 2 ist aus einer Laserlicht absorbierenden Kunststoffmaterialtafel tiefgezogen hergestellt. Demgegenüber ist das Verschlussteil 3 der in den Figuren 1 und 2 dargestellten Ausführungsbeispiele von einer Laserlicht durchlässigen planen Kunststofffolie gebildet. Das Verschlussteil 3 ist mit einem umlaufenden Rand 11, der den Verbindungsbereich 6 bildet, mit dem Bund 10 des Verpackungsbehälters 2 stoffschlüssig verbunden. Bei der in der Figur 3 dargestellten Ausführungsform der Verpackung 1 wird das Verschlussteil 3 nicht wie bei dem Ausführungsformen von Figur 1, 2 von einer einlagigen Kunststofffolie gebildet. Stattdessen ist das Verschlussteil 3 zweilagig ausgebildet, wobei die Kunststoffverbundfolie auf einen Papier- oder Kartonzuschnitt auflaminiert ist. Gemäß den Abbildungen 1 bis 3 deckt die Reflexionsschicht 8, die entsprechend der Größe der Zuführ-/Entnahmeöffnung 7 ausgebildet ist, jeweils den Hohlraum 4 vollkommen ab. Sie lässt nur den Rand 11 des Verschlussteils 3 frei. In den Figuren 1 und 3 ist die Reflexionsschicht 8 auf der dem Verpackungsbehälter 2 abgewandten Seite des Verschlussteils 3 angeordnet, bei der Figur 2 auf der dem Verpackungsbehälter 2 zugewandten Seite des Verschlussteils 3.

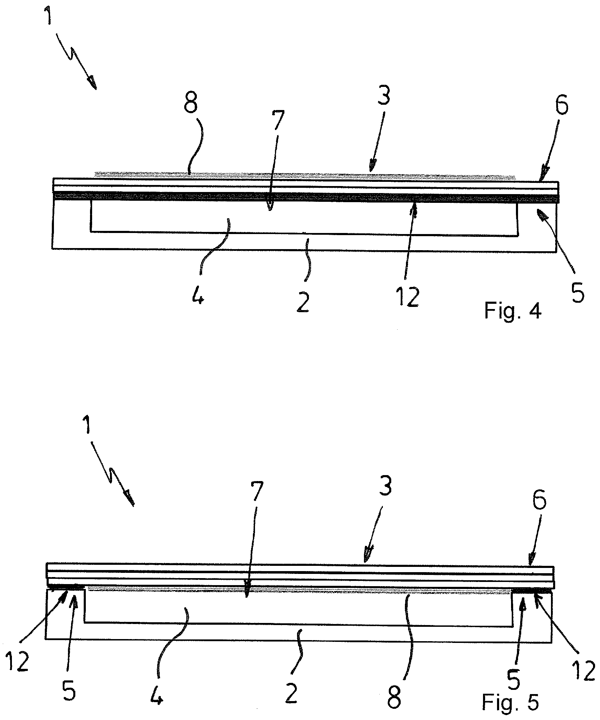

Die Ausführungsformen der Verpackungen gemäß Figur 4 und 5 unterscheiden sich von den in den Figuren 1 bis 3 dargestellten Ausführungsbeispielen dadurch, dass der Verpackungsbehälter 2 aus Laserlicht durchlässigem Kunststoffmaterial hergestellt ist und das Verschlussteil 3 als Multilayer-Kunststofffolie ausgebildet ist. Das Verschlussteil 3 ist ebenfalls für Laserlicht durchlässig ausgeführt. Demzufolge ist eine Absorptionsschicht 12 zwischen dem Verpackungsbehälter 2 und dem Verschlussteil 3 angeordnet. Die Absorptionsschicht 12 ist jeweils auf der dem Verpackungsbehälter 2 zugewandten Seite des Verschlussteils 3 aufgebracht und erstreckt sich gemäß der Figur 4 über die gesamte Fläche des Verschlussteils 3 und bei der Figur 5 nur im Bereich des Verbindungsbereiches 6 des Verschlussteils 3. Gemäß der Figur 4 ist die Reflexionsschicht 8, die den Hohlraum 4 des Verpackungsbehälters 2 übergreift, auf der den Verpackungsbehälter 2 abgewandten Seite, des Verschlussteils 3 angeordnet. Demgegenüber ist bei der Figur 5 die Reflexionsschicht 8 auf der dem Verpackungsbehälter 2 zugewandten Seite des Verschlussteils 3 angeordnet.

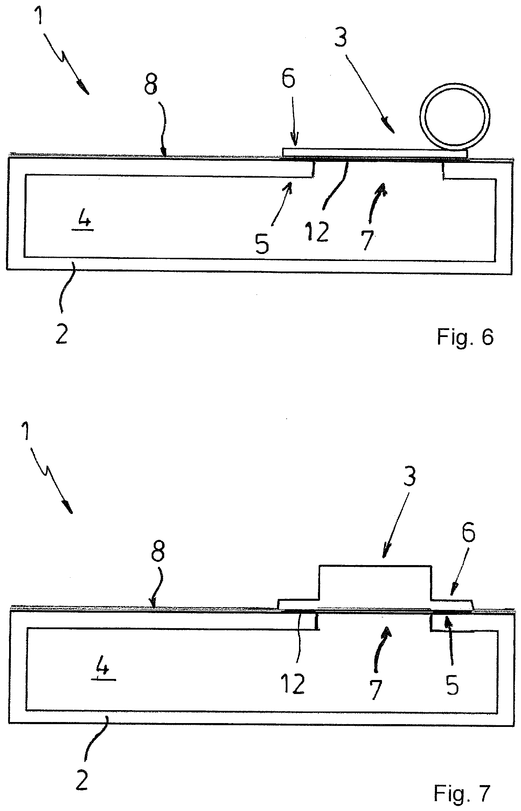

Bei den in den Figuren 6, 7 abgebildeten Ausführungsformen der erfindungsgemäßen Verpackung 1 ist der Verpackungsbehälter 2 im Wesentlichen geschlossen ausgebildet und weist lediglich auf der Oberseite eine kleine Zuführ-/Entnahmeöffnung 7 auf. In der Figur 6 ist das Verschlussteil 3 als Aufreißer mit einer Greifflasche und in der Figur 7 als Ausgießer mit einem in der Zeichnung nicht dargestellten Deckel ausgeführt. Der Verpackungsbehälter 2 ist vollständig aus Kunststoffmaterial hergestellt oder aus einem mit Kunststoff beschichtetem Karton- oder Aluminium-Material. Er ist insbesondere Laserlicht undurchlässig und Laserlicht absorbierend ausgeführt. Das Verschlussteil 3 ist demgegenüber aus einem Laserlicht durchlässigen Kunststoffmaterial hergestellt. Zwischen dem Verschlussteil 3 und dem Verpackungsbehälter 2 ist jeweils eine Absorptionsschicht 12 angeordnet, die die Zuführ-/Entnahmeöffnung 7 vollständig umgreift und/oder übergreift. Die Absorptionsschicht 12 reicht insbesondere bis hin zu dem Anbindungsbereich 5 des Verpackungsbehälters 2 und dem Verbindungsbereich 6 des Verschlussteils 3. Sie umschließt die Zuführ-/Entnahmeöffnung 7 vollständig. Die Absorptionsschicht 12 ist auf den Verpackungsbehälter 2 aufgebracht, vorzugsweise aufgedruckt. Zudem weist der Verpackungsbehälter 2 eine Reflexionsschicht 8 auf, die sich um das Verschlussteil 3 herum erstreckt und die Absorptionsschicht 12 einschließt. Die Reflexionsschicht 8 ist auf den Verpackungsbehälter 2 vorzugsweise aufgedruckt.

## Patentansprüche

1. Verfahren zum fluiddichten Verbinden eines Verschlussteils (3) mit einem Verpackungsbehälter (2) einer fluiddichten Verpackung (1) mittels Laserdurchstrahlschweißen, wobei der Verpackungsbehälter (2) Kunststoffmaterial zumindest als äußere Schichtlage in einem Anbindungsbereich (5) für das Verschlussteil (3) aufweist, der eine mit dem Verschlussteil (3) zu verschließende Zuführ-/Entnahmeöffnung (7) für ein Füllgut vollständig umgreift und wobei das Verschlussteil (3) wenigstens an einem dem Anbindungsbereich (5) zugeordneten Verbindungsbereich (6) Kunststoffmaterial zumindest als Beschichtung aufweist, mit den folgenden Schritten:
- Beschichten des Verpackungsbehälters (2) außerhalb des Anbindungsbereiches (5) und/oder des Verschlussteils (3) außerhalb des Verbindungsbereiches (6) mit einer Laserlicht rückstrahlenden Reflexionsschicht (8);
- Bereitstellen des vorzugsweise mit Füllgut gefüllten Verpackungsbehälters (2) und Aufsetzen des Verschlussteils (3) mit dem Verbindungsbereich (6) auf den Anbindungsbereich (5) des Verpackungsbehälters (2);
- Bestrahlen des Verpackungsbehälters (2) und des Verschlussteiles (3) mit einem linienförmigen oder flächenhaften energiereichen Laserstrahls;
- Herstellen einer stoffschlüssigen Verbindung des Verbindungsbereiches (6) des Verschlussteils (3) mit dem Anbindungsbereich (5) des Verpackungsbehälters durch aneinander Pressen.

2. Verfahren nach Anspruch 1, **dadurch gekennzeichnet, dass** der Verpackungsbehälter (2) mit dem aufgesetzten Verschlussteil (3) beim Laserdurchstrahlschweißen gegenüber einem ortsfesten Laserstrahl kontinuierlich bewegt wird.

3. Verfahren nach Anspruch 2, **dadurch gekennzeichnet, dass** der Laserstrahl synchronisiert mit der Bewegung des Verpackungsbehälters (2) mit Verschlussteil (3) ein- und ausgeschaltet wird.

4. Verfahren nach einem der vorstehenden Ansprüche, **dadurch gekennzeichnet, dass** die Reflexionsschicht (8) auf den Verpackungsbehälter (2) und/oder das Verschlussteil (3) aufgedruckt wird.

5. Verfahren nach Anspruch 4, **dadurch gekennzeichnet, dass** für die Reflexionsschicht (8) reflektierende Farbstoffe verwendet werden.

6. Verfahren nach einem der vorstehenden Ansprüche, **dadurch gekennzeichnet, dass** für den Verpackungsbehälter (2) Laserlicht absorbierendes und für das Verschlussteil (3) Laserlicht durchlässiges Kunststoffmaterial verwendet wird, wobei die Reflexionsschicht (8) auf der den Verpackungsbehälter (2) zugewandten oder abgewandten Seite des Verschlussteils (3) angeordnet wird.

7. Verfahren nach einem der vorstehenden Ansprüche 1 bis 5, **dadurch gekennzeichnet, dass** für den Verpackungsbehälter (2) und das Verschlussteil (3) Laserlicht durchlässiges Kunststoffmaterial verwendet wird, wobei die Reflexionsschicht (8) auf der dem Verpackungsbehälter (2) abgewandten Seite des Verschlussteils (3) angeordnet wird und wobei auf der dem Verpackungsbehälter (2) zugewandten Seite des Verschlussteils (3) zumindest im Verbindungsbereich (6) eine Laserlicht absorbierende Absorptionsschicht (12) aufgebracht wird.

8. Verfahren nach einem der vorstehenden Ansprüche 1 bis 5, **dadurch gekennzeichnet, dass** für den Verpackungsbehälter (2) und das Verschlussteil (3) Laserlicht durchlässiges Kunststoffmaterial verwendet wird, wobei die Reflexionsschicht (8) auf der dem Verpackungsbehälter (2) abgewandten Seite des Verschlussteils (3) angeordnet wird und an dem Anbindungsbereich (5) des Verpackungsbehälters (2) oder an dem Verbindungsbereich (6) des Verschlussteils (3) eine Laserlicht absorbierende Absorptionsschicht (12) aufgebracht wird.

9. Verfahren nach Anspruch 7 oder 8, **dadurch gekennzeichnet, dass** die Absorptionsschicht (12) aufgedruckt wird,

10. Verfahren nach Anspruch 9, **dadurch gekennzeichnet, dass** für die Absorptionsschicht (12) absorbierende Farbstoffe verwendet werden.

11. Fluiddichte Verpackung (1) für feste, rieselfähige, pastöse oder flüssige Füllstoffe mit einem Verpackungsbehälter (2), der einen Hohlraum (4) für die Füllstoffe aufweist und mit einem den Hohlraum (4) fluiddicht verschließenden Verschlussteil (3), wobei der Verpackungsbehälter (2) Kunststoffmaterial zumindest als äußere Schichtlage in einem Anbindungsbereich (5) für das Verschlussteil (3) aufweist, der eine mit dem Verschlussteil (3) zu verschließende Zuführ-/Entnahmeöffnung (7) für das Füllgut vollständig umgreift, und wobei das Verschlussteil (3) wenigstens an einem dem Anbindungsbereich (5) des Verpackungsbehälters (2) zugeordneten Verbindungsbereich (6) Kunststoffmaterial zumindest als Beschichtung aufweist, und wobei das Verschlussteil (3) mit dem Verpackungsbehälter (2) mittels Laserdurchstrahlschweißen stoffschlüssig verbunden bzw. verbindbar ist, **dadurch gekennzeichnet, dass** der Verpackungsbehälter (2) außerhalb des Anbindungsbereiches (5) und/oder das Verschlussteil (3) außerhalb des Verbindungsbereiches (6) eine Laserlicht rückstrahlende Reflexionsschicht (8) aufweist.

12. Verpackung nach Anspruch 11, **dadurch gekennzeichnet, dass** zumindest an dem Anbindungsbereich (5) des Verpackungsbehälters (2) oder an dem Verbindungsbereich (6) des Verschlussteils (3) eine Laserlicht absorbierende Absorptionsschicht (12) angeordnet ist.

## Claims

1. A method for the fluid-tight connection of a closure member (3) to a packaging container (2) of fluid-tight packaging (1) by means of laser penetration welding, wherein the packaging container (2) includes plastic material, at least as the outer layer in a connection region (5) for the closure member (3)m which extends completely around an introduction/removal opening (7), which is to be closed with the closure member (3), for a product to be packaged and wherein the closure member (3) includes plastic material, at least in the form of a coating, at least on a connection region (6) associated with the connection region (5), with the following steps:
- coating the packaging container (2) outside the connection region (5) and/or the closure member (3) outside the connection region (6) with a reflection layer (8), which reflects laser light;
- providing the packaging container (2), preferably filled with product to be packaged, and placing the closure member (3) on it with the connection region (6) on the connection region (5) of the packaging container (2);
- irradiating the packaging container (2) and the closure member (3) with a linear or areal high-energy laser beam;
- producing a substance-to-substance connection of the connection region (6) of the closure member (3) with the connection region (5) of the packaging container by pressing them together.

2. A method as claimed in Claim 1, **characterised in that** the packaging container (2) with the closure member (2) placed on it is moved continuously during the laser penetration welding with respect to a fixed laser beam.

3. A method as claimed in Claim 2, **characterised in that** the laser beam is switched on and off in synchronism with the movement of the packaging container (2) with the closure member (3).

4. A method as claimed in one of the preceding claims, **characterised in that** the reflection layer (8) is printed onto the packaging container (2) and/or the closure member (3).

5. A method as claimed in Claim 4, **characterised in that** reflective colorants are used for the reflective layer (8).

6. A method as claimed in one of the preceding claims, **characterised in that** laser light-absorbent plastic material is used for the packaging container (2) and laser light-permeable plastic material is used for the closure member (3), wherein the reflection layer (8) is arranged on the side of the closure member (3) directed towards or away from the packaging container (2).

7. A method as claimed in one of the preceding Claims 1 to 5, **characterised in that** laser light-permeable plastic material is used for the packaging container (2) and the closure member (3), wherein the reflection layer (8) is arranged on the side of the closure member (3) directed away from the packaging container (2) and wherein a laser light-absorbing absorption layer (12) is applied to the side of the closure member (3) directed towards the packaging container (2), at least in the connection region (6).

8. A method as claimed in one of the preceding Claims 1 to 5, **characterised in that** laser light-permeable plastic material is used for the packaging container (2) and the closure member (3), wherein the reflection layer (8) is arranged on the side of the closure member (3) directed away from the packaging container (2) and a laser light-absorbing absorption layer is applied to the connection region (5) of the packaging container (2) or to the connection region (6) of the closure member (3).

9. A method as claimed in Claim 7 or 8, **characterised in that** the absorption layer (12) is printed on.

10. A method as claimed in Claim 9, **characterised in that** absorbent colorants are used for the absorption layer (12).

11. A fluid-tight packaging (1) for solid, free-flowing, pasty or fluid filling materials, with a packaging container (2), which has a cavity (4) for the product to be packaged, and a closure member (3) closing the cavity (4) in a fluid-tight manner, wherein the packaging container (2) has plastic material, at least as the outer layer, in a connection region (5) for the closure member (3), which extends completely around an introduction/removal opening (7), which is to be closed with the closure member (3), for the product to be packaged, and wherein the closure member (3) has plastic material, at least in the form of a coating, at least on a connection region (6) associated with the connection region (5) of the packaging container (2), and wherein the closure member (3) is connected or connectable in a substance-to-substance manner to the packaging container (2) by means of laser penetration welding, **characterised in that** the packaging container (2) has a reflection layer (8), which reflects laser light, outside the connection region (5) and/or the closure member (3) has a reflection layer (8), which reflects laser light, outside the connection region (6).

12. Packaging as claimed in Claim 11, **characterised in that** a laser light-absorbing absorption layer (12) is arranged at least on the connection region (5) of the packaging container (2) or on the connection region (6) of the closure member (3).

## Revendications

1. Procédé de liaison étanche aux fluides, par soudage aux faisceaux laser, d'une partie d'obturation (3) avec un récipient de conditionnement (2) d'un emballage (1) étanche aux fluides, ledit récipient de conditionnement (2) présentant une matière plastique, au moins en tant que couche d'enveloppement extérieure, dans une zone de rattachement (5) qui est dévolue à la partie d'obturation (3) et ceinture intégralement un orifice (7) de délivrance/prélèvement d'une matière de remplissage, devant être occulté par ladite partie d'obturation (3), et ladite partie d'obturation (3) présentant une matière plastique, au moins en tant que revêtement, au moins dans une zone de liaison (6) associée à ladite zone de rattachement (5), incluant les étapes suivantes :
- revêtement du récipient de conditionnement (2) à l'extérieur de la zone de rattachement (5), et/ou de la partie d'obturation (3) à l'extérieur de la zone de liaison (6), par une couche réflectrice (8) renvoyant la lumière laser ;
- fourniture du récipient de conditionnement (2) de préférence empli de matière de remplissage, et mise en place de la partie d'obturation (3), par la zone de liaison (6), sur la zone de rattachement (5) dudit récipient de conditionnement (2) ;
- irradiation dudit récipient de conditionnement (2) et de ladite partie d'obturation (3) par un faisceau laser de haute énergie, traçant une ligne ou couvrant une surface ;
- instauration d'une solidarisation matérielle de ladite zone de liaison (6) de la partie d'obturation (3) avec ladite zone de rattachement (5) du récipient de conditionnement, en les pressant l'une contre l'autre.

2. Procédé selon la revendication 1, **caractérisé par le fait que** le récipient de conditionnement (2) est animé d'un mouvement continu conjointement à la partie d'obturation (3) mise en place, au cours du soudage aux faisceaux laser, par rapport à un faisceau laser fixe.

3. Procédé selon la revendication 2, **caractérisé par le fait que** le faisceau laser est activé et désactivé en synchronisme avec le mouvement du récipient de conditionnement (2) conjointement à la partie d'obturation (3).

4. Procédé selon l'une des revendications précédentes, **caractérisé par le fait que** la couche réflectrice (8) est appliquée par impression sur le récipient de conditionnement (2) et/ou sur la partie d'obturation (3).

5. Procédé selon la revendication 4, **caractérisé par le fait que** des substances colorantes réfléchissantes sont employées pour la couche réflectrice (8).

6. Procédé selon l'une des revendications précédentes, **caractérisé par le fait qu'**une matière plastique absorbant de la lumière laser est utilisée pour le récipient de conditionnement (2), et une matière plastique laissant passer la lumière laser est utilisée pour la partie d'obturation (3), la couche réflectrice (8) étant placée sur la face de ladite partie d'obturation (3) qui est tournée vers ledit récipient de conditionnement (2), ou à l'opposé de ce dernier.

7. Procédé selon l'une des revendications précédentes 1 à 5, **caractérisé par le fait qu'**une matière plastique laissant passer la lumière laser est utilisée pour le récipient de conditionnement (2) et pour la partie d'obturation (3), sachant que la couche réflectrice (8) est placée sur la face de ladite partie d'obturation (3) qui est tournée à l'opposé dudit récipient de conditionnement (2), et sachant qu'une couche d'absorption (12) absorbant la lumière laser est déposée, au moins dans la zone de liaison (6), sur la face de ladite partie d'obturation (3) qui est tournée vers ledit récipient de conditionnement (2).

8. Procédé selon l'une des revendications précédentes 1 à 5, **caractérisé par le fait qu'**une matière plastique laissant passer la lumière laser est utilisée pour le récipient de conditionnement (2) et pour la partie d'obturation (3), sachant que la couche réflectrice (8) est placée sur la face de ladite partie d'obturation (3) qui est tournée à l'opposé dudit récipient de conditionnement (2) et qu'une couche d'absorption (12), absorbant la lumière laser, est déposée sur la zone de rattachement (5) dudit récipient de conditionnement (2) ou sur la zone de liaison (6) de ladite partie d'obturation (3).

9. Procédé selon la revendication 7 ou 8, **caractérisé par le fait que** la couche d'absorption (12) est appliquée par impression.

10. Procédé selon la revendication 9, **caractérisé par le fait que** des substances colorantes absorbantes sont employées pour la couche d'absorption (12).

11. Emballage (1) étanche aux fluides et dédié à des matières de remplissage solides, coulantes, pâteuses ou liquides, comprenant un récipient de conditionnement (2) muni d'une cavité (4) destinée auxdites matières de remplissage, et une partie d'obturation (3) qui obture ladite cavité (4) avec étanchéité aux fluides, sachant que ledit récipient de conditionnement (2) présente une matière plastique, au moins en tant que couche d'enveloppement extérieure, dans une zone de rattachement (5) qui est dévolue à la partie d'obturation (3) et ceinture intégralement un orifice (7) de délivrance/prélèvement de la matière de remplissage, devant être occulté par ladite partie d'obturation (3), sachant que ladite partie d'obturation (3) présente une matière plastique, au moins en tant que revêtement, au moins dans une zone de liaison (6) associée à ladite zone de rattachement (5) dudit récipient de conditionnement (2), et sachant que ladite partie d'obturation (3) est, ou peut être reliée matériellement audit récipient de conditionnement (2) par soudage aux faisceaux laser, **caractérisé par le fait que** le récipient de conditionnement (2) et/ou la partie d'obturation (3) présente(nt), respectivement à l'extérieur de la zone de rattachement (5) et à l'extérieur de la zone de liaison (6), une couche réflectrice (8) renvoyant la lumière laser.

12. Emballage selon la revendication 11, **caractérisé par le fait qu'**une couche d'absorption (12), absorbant la lumière laser, est placée au moins dans la zone de rattachement (5) du récipient de conditionnement (2) ou dans la zone de liaison (6) de la partie d'obturation (3).
